# EUROPEAN PATENT SPECIFICATION

(11) **EP 2 600 532 B1**
(45) Date of publication and mention of the grant of the patent: **18.02.2015**
(21) Application number: 11191690.4
(22) Date of filing: 02.12.2011
(51) Int. Cl.: H04B 1/10, H04B 1/30, H04W 52/02

(54) **Receiver with selective signal path operation and associated methods**
Empfänger mit selektivem Signalwegbetrieb und zugehörige Verfahren
Récepteur doté d'un fonctionnement sélectif du parcours de signal et procédés correspondants

(43) Date of publication of application: 05.06.2013
(73) Proprietor: BlackBerry Limited, Waterloo, ON N2K 0A7 (CA)
(72) Inventor: Kravets, Oleksiy, Waterloo, Ontario N2L 3W8 (CA)
(74) Representative: Bryn-Jacobsen, Caelia

(56) References cited:
- WO-A1-2010/123573
- US-A1- 2006 141 974

## Description

### Technical Field

The present disclosure relates to the field of receivers, and more particularly, to low intermediate frequency (low-IF) receivers.

### Background

Mobile wireless communications systems continue to grow in popularity and have become an integral part of both personal and business communications. For example, cellular telephones allow users to place and receive voice calls almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc.

Such multi-function devices may also allow users to wirelessly send and receive electronic mail (email) messages and access the Internet via a cellular network and/or a wireless local area network (WLAN), for example. Many of these devices include low intermediate frequency (low-IF) receivers. A low-IF receiver has two down conversion stages, i.e., a two step down-conversion to DC of the received radio frequency (RF) signals.

A first down conversion stage operates at a carrier frequency minus an intermediate frequency, and a second down conversion stage operates at the intermediate frequency. The first down conversion stage is a quadrature down converter (complex mixer) that down converts the received RF signals to a complex analog in-phase and quadrature (I/Q) form with a small frequency offset, i.e., a low-IF. The complex analog in-phase and quadrature signals are then digitized so that the second down conversion stage converts these signals to DC using a digital complex mixer.

A problem with receiver, and particularly low-IF receivers, is high current consumption. This is because the first down conversion stage in the low-IF receiver has two independent analog/RF circuit paths that carry the I and Q signal representations. Current consumption is especially problematic for battery operated devices where there is a need for prolonging the life of the battery.

WO 2010/123573 is directed to a communication receiver which applies signal processing for quantitatively estimating receive signal factors such as communication channel quality, signal characteristics, and overall system received bit error rate (BER)or packet error rate (PER) and which applies a general algorithm for mapping these estimated factors to control receiver performance and minimize power consumption.

US 2006/0141974 is directed to a low IF mixer and method for down-converting a signal at a desired frequency are disclosed with improved selectivity performance. The energy of sidebands on each side of the desired frequency is evaluated; and a local oscillator frequency is selected based on the evaluation of the energy. Generally, the local oscillator frequency associated with the sideband having a lower energy is selected. The desired frequency may have a frequency of RF and the sidebands have a frequency of the desired frequency plus or minus an offset frequency (RF+IF or RF-IF). The signal at the desired frequency may be multiplied by the selected local oscillator frequency to down-convert the signal.

The present invention is set out in the independent claims, with some optional features set out in the claims dependent thereto.

### Brief Description of the Drawings

FIG. 1 is a schematic block diagram of a receiver in accordance with the present disclosure.
FIG. 2 are schematic spectral graphs of a wanted signal with an adjacent interference signal when both of the in-phase and quadrature channel paths in the receiver illustrated in FIG. 1 are powered on.
FIG. 3 are schematic spectral graphs of a wanted signal with no adjacent interference signal when only one of the in-phase and quadrature channel paths in the receiver illustrated in FIG. 1 is powered on.
FIG. 4 are schematic spectral graphs of a wanted signal with an adjacent interference signal when only one of the in-phase and quadrature channel paths is powered on and then when both of the in-phase and quadrature channel paths are powered on in the receiver illustrated in FIG. 1.
FIG. 5 is a flowchart illustrating a method for operating a receiver in accordance with the present disclosure.
FIG. 6 is a front view of a mobile wireless communications device in accordance with the present disclosure.
FIG. 7 is a schematic block diagram illustrating additional components that may be included in the mobile wireless communications device illustrated in FIG. 6.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

In accordance with one exemplary aspect, a receiver includes a first local oscillator, and an in-phase mixer and a quadrature mixer coupled to the first local oscillator and configured to generate in-phase (I) and quadrature (Q) signals based upon received RF signals. A complex mixer is downstream from the in-phase and quadrature mixers. A controller is coupled to the in-phase and quadrature mixers and is configured to determine when the in-phase and quadrature signals include interference less than an interference threshold, and then power off one of the in-phase and quadrature mixers.

As will be explained in greater detail below, the in-phase and quadrature mixers are within their respective in-phase and quadrature analog paths, and these paths include other analog components. When one of the in-phase and quadrature mixers is powered off, then the corresponding in-phase or quadrature analog path is being powered off.

When the controller determines that the receiver is operating in a relatively clean environment, the received RF signals can be down-converted as a real analog signal (I or Q) by using only one of the in-phase and quadrature mixers instead of down-converting the received RF signals as a complex (I and Q) analog signal. For a battery operated receiver, powering off one of the in-phase and quadrature mixers advantageously prolongs the life of the battery while maintaining communications.

When switching from a complex representation to a real representation of the received RF signals within the receiver, an image is created, i.e., a negative frequency creates an equivalent image of the positive frequency, and vice-versa. However, the image signal may be readily suppressed using a low pass filter that is downstream from the complex mixer.

The controller may comprise an interference detector, such as a spectrum density estimator, for example. The controller may further comprise a signal-to-noise ratio (SNR) estimator cooperating with the interference detector and coupled downstream of the complex mixer. The receiver may further comprise a low pass filter coupled between the complex mixer and the SNR estimator. The SNR estimator may be configured to determine when an output signal from the low pass filter is greater than a SNR threshold.

The receiver may further comprise a first analog-to-digital converter coupled between the in-phase mixer and the complex mixer, and a second analog-to-digital converter coupled between the quadrature mixer and the complex mixer. The controller may only be coupled to an output of one of the first and second analog-to-digital converters that is associated with the in-phase or quadrature mixer (i.e., the in-phase or quadrature analog path) that is being powered off.

The receiver may further comprise a battery to power the first local oscillator, the in-phase and quadrature mixers, the complex mixer and the controller. The controller may be coupled between the battery and the in-phase or quadrature mixer that is to be powered off.

A method aspect is for operating a receiver as described above. The method comprises generating in-phase and quadrature signals via the in-phase and quadrature mixers based upon received RF signals, and operating the controller to determine when the in-phase and quadrature signals include interference less than the interference threshold, and then power off one of the in-phase and quadrature mixers.

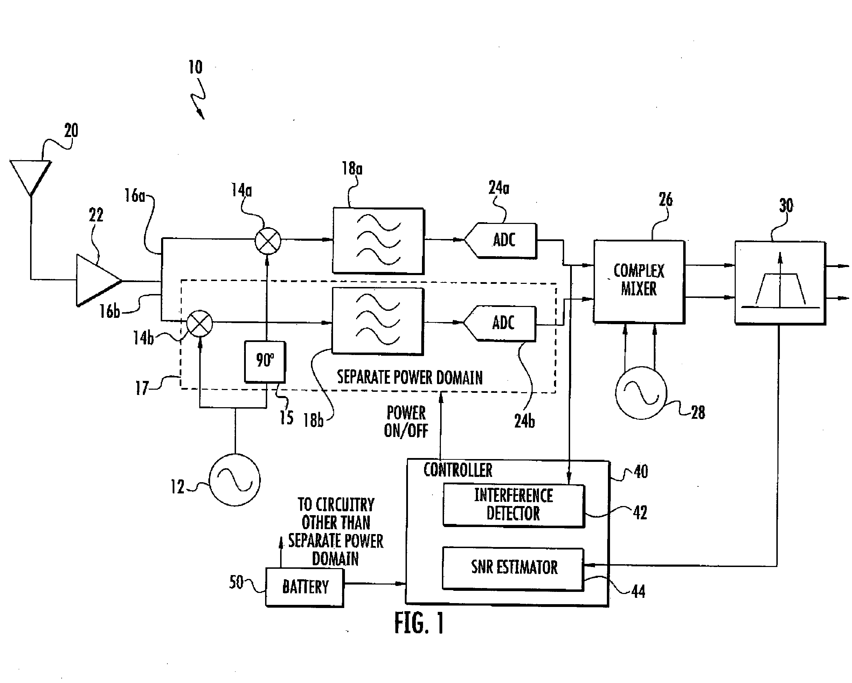

Referring now to FIG. 1, a receiver **10** includes a first local oscillator **12,** and an in-phase (I) mixer **14a** and a quadrature (Q) mixer **14b** coupled to the first local oscillator. The in-phase and quadrature mixers **14a, 14b** are configured to generate in-phase and quadrature signals based upon received RF signals. The in-phase signals are provided to an I channel path **16a,** and the quadrature signals are provided to a Q channel path **16b.** A complex mixer **26** is downstream from the in-phase and quadrature mixers **14a, 14b.** A controller **40** is coupled to the in-phase and quadrature mixers **14a**, **14b** and is configured to determine if the in-phase and quadrature signals include interference less than an interference threshold, and if so, then turns off one of the in-phase and quadrature mixers.

The circuitry of the receiver **10** is illustratively powered by a battery **50.** As will be explained in greater below, the receiver **10** has independent power control for the I and Q channel paths **16a**, **16b.** In a clean RF environment, the wanted signals have a high signal-to-noise ratio and there are no adjacent interference signals or the adjacent interference signals are below the interference threshold. This advantageously allows the analog/RF components supporting the I channel path **16a** or the analog/RF components supporting the Q channel path **16b** to be powered off, which, in turn, prolongs the life of the battery **50.**

Still referring to FIG. 1, the receiver **10** is illustratively a low intermediate frequency (low-IF) receiver, and includes an antenna **20** configured to receive RF signals, i.e., input signals. The antenna **20** is coupled to a low noise amplifier **22** since the input signals may be very low power. The amplified input signals are then passed to the in-phase and quadrature mixers **14a, 14b.**

[**0025**] The first local oscillator **12** is operating at a first intermediate frequency, and is coupled to the in-phase mixer **14a** through a phase delay block **15,** and to the quadrature mixer **14b.** The phase delay block **15** separates the phase of the input signals received by the in-phase and quadrature mixers **14a, 14b** from the first local oscillator **12** by 90 degrees. This arrangement results in the in-phase and quadrature mixers **14a**, **14b** driving the input signals to a low-IF.

The in-phase and quadrature mixers **14a**, **14b** are, in turn, coupled to analog filters **18a, 18b.** The analog filters **18a**, **18b** are coupled to analog-to-digital converters (ADCs) **24a, 24b.** The analog-to-digital converters **24a**, **24b** are in turn coupled to the complex mixer **26.** One of the analog-to-digital converters **24a** is also coupled to the controller **40.** The complex mixer **26** is coupled to a second local oscillator **28** operating at a second intermediate frequency. The second local oscillator **28** drives the received RF signals to DC.

A digital low pass filter **30** is coupled to the complex mixer **26.** Although not illustrated, a baseband processor is coupled downstream of the digital low pass filter **30.** Those skilled in the art will appreciate that at least one of the analog-to-digital converters **24a** or **24b** and the digital low pass filter **30** are coupled to the controller **40.** The controller **40** is configured to determine when the RF signals as received by the antenna **20** include an interference signal less than the interference threshold, and when a SNR of an output signal from the digital low pass filter **30** is greater than a SNR threshold.

More particularly, the controller **40** includes an interference detector **42** and a SNR estimator **44.** The interference detector **42** may be a spectrum density estimator, for example, that performs an FFT on the received RF signals. The interference detector **42** determines the presence of interference signals on the output of one of the ADCs.

In the illustrated embodiment, the interference detector **42** is coupled to the output of the ADC **24a** in the I channel path **16a.** As highlighted by the dashed block **17** in FIG. 1, the Q channel path **16b** has its separate power domain. Since the Q channel path **16b** will be powered off when the interference detector **42** detects a clean environment, the environment will continued to still be monitored via the I channel path **16a.** Consequently, the interference detector **42** is coupled to the output of the ADC that is to remain powered on. Although the Q channel path **16b** has its own separate power domain **17,** the roles may be reversed so that the I channel path **16a** has its own separate power domain while the interference detector **42** is coupled to the output of the ADC **24b** in the Q channel path **16b.**

The SNR estimator **44** serves as an override of the interference detector **42.** For instance, it may be hard to detect a blinking interference or a jammer that does not transmit uniformly spaced signals. Even though the interference detector **42** may detect a relatively clean environment, the SNR of the output signal from the digital low pass filter **30** may be low nonetheless, i.e., less than the desired SNR threshold. This is a result of the interference signal overlapping with the wanted signal. Based on the SNR estimator **44,** the controller **40** will power back on the Q channel path **16b** even though the interference detector **42** is detecting a relatively clean environment.

The battery **50** is coupled to the controller **40,** which in turn controls the power to the Q channel path **16b,** which has a separate power domain **17.** The battery **50** is also coupled to circuitry other than the separate power domain. When the Q channel path **16b** is powered off, then power is removed from the quadrature mixer **14b** which has its own PLL associated therewith, the filter **18b,** and the ADC **24b.** Powering off the analog/RF circuits that carry the Q signal representation advantageously prolongs the life of the battery **50** while maintaining communications using the I signal representation in the I channel path **16a.**

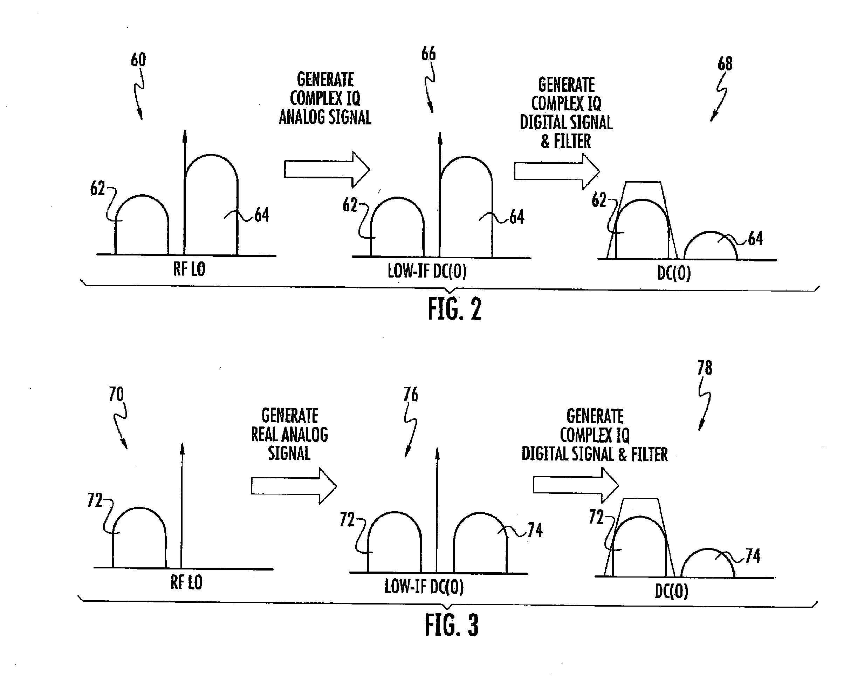

Operation of the receiver **10** will now be discussed in reference to schematic spectral graphs provided in FIGS. 2, 3 and 4. As noted above, a main feature of the quadrature down-conversion stage **14a, 14b** and subsequent complex analog IQ signal representation within the receiver **10** is image suppression.

Image suppression is advantageous when the signals received by the antenna **20** include interference. Without image suppression, one side (negative) of the frequency folds on top of the other side (positive) of the frequency. However, when the controller **40** determines that the receiver **10** is operating in a relatively clean environment, the received RF signals can be down-converted as a real analog signal (I or Q) by using only one of the in-phase and quadrature mixers **14a** or **14b** instead of down-converting the received RF signals as a complex (I and Q) analog signal. For a battery operated receiver, powering off one of the in-phase and quadrature mixers advantageously prolongs the life of the battery **50** while maintaining communications.

When switching from a complex representation to a real representation of the received RF signals within the receiver **10,** an image is created, i.e., a negative frequency creates an equivalent image of the positive frequency, and vice-versa. However, the image signal may be readily suppressed using a digital low pass filter **30** that is downstream from the complex mixer **26.**

Referring now to FIG. 2, reception of a wanted signal with an adjacent interference signal will be discussed in terms of being received, down-converted and filtered by the receiver **10** when both of the in-phase and quadrature channels **16a, 16b** are powered on. This is a full power mode of the receiver **10.**

Spectral graph **60** illustrates the signals as received by the antenna **20** at a carrier frequency, i.e., RF LO. The received RF signals include a wanted signal **62** and an adjacent interference signal **64.** The wanted signal **62** is offset from the adjacent interference signal **64** by the low-if frequency. This offset may be a few hundred kHz for GSM signals, and a few MHz for CDMA signals, for example.

Spectral graph **66** illustrates the wanted signal **62** and the adjacent interference signal **64** as output from the in-phase and quadrature mixers **14a, 14b.** Since both of the I and Q channel paths **16a, 16b** are powered on, a complex IQ analog signal is generated. The wanted signal **62** is centered at the low-IF and the adjacent interference signal **64** is close to DC.

Spectral graph **68** illustrates the output of the complex mixer **26** after filtering by the digital low pass filter **30.** The wanted signal **62** is now centered at DC whereas the interference signal **64** has been suppressed by the digital low pass filter **30.**

Referring now to FIG. 3, reception of a wanted signal will be discussed in terms of being received, down-converted and filtered by the receiver **10** when only one of the in-phase and quadrature channel paths **16a, 16b** is powered on. No adjacent interference signal is present, or if an adjacent interference signal is present, it is below the interferences threshold. This is a power saving mode of the receiver **10.**

Spectral graph **70** illustrates the signals as received by the antenna **20** at the carrier frequency. The received RF signals include a wanted signal **72** without an adjacent interference signal. The wanted signal **72** is offset from the carrier frequency by the low-IF frequency.

Spectral graph **76** illustrates the wanted signal **72** as output from only one of the in-phase and quadrature mixers **14a**, **14b.** In this case, only the I channel path **16a** is powered on. As a result, a real analog signal (I) is provided to the complex mixer **26.** However, since only the I channel path **16a** is powered on, an image of the wanted signal **74** is also generated. The image of the wanted signal **74** is opposite in frequency to the frequency of the wanted signal **72.**

Spectral graph **78** illustrates the output of the complex mixer **26** after filtering by the digital low pass filter **30.** The wanted signal **72** is now centered at DC whereas the image of the wanted signal **76** has been suppressed by the digital low pass filter **30.**

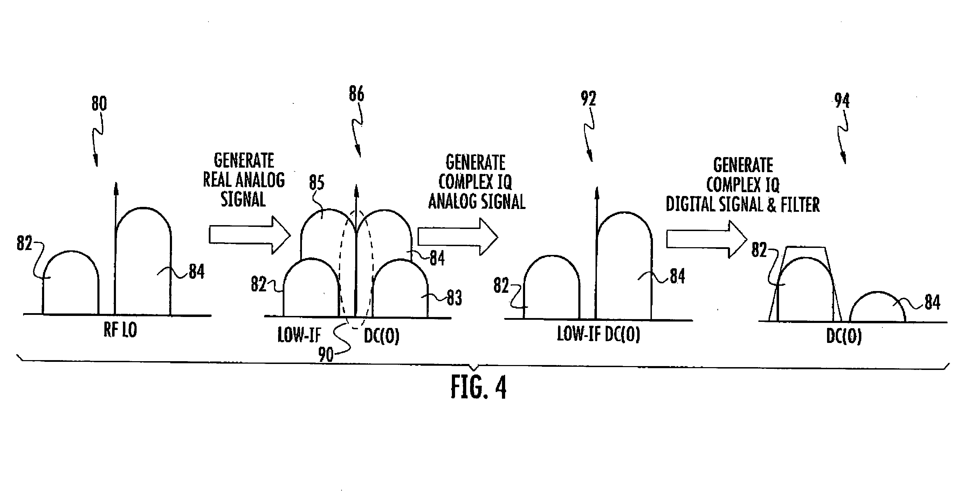

Referring now to FIG. 4, reception of a wanted signal with an adjacent interference signal will be discussed in terms of being received, down-converted and filtered by the receiver **10** when only the I channel path **16a** is powered on, and then when both of the I and Q channel paths **16a**, **16b** are powered on. This is the receiver **10** changing from the power saving mode to the full power mode.

Spectral graph **80** illustrates the signals as received by the antenna **20** at the carrier frequency. The received RF signals include a wanted signal **82** and an adjacent interference signal **84.** The wanted signal **82** is offset from the adjacent interference signal **84** by the low-IF frequency.

Initially, only the I channel path **16a** is powered on. In this configuration, the output of the in-phase mixer **14a** is a real analog signal as represented by spectral graph **86.** However, in addition to the output of the in-phase mixer **14a** including the wanted signal **82** and the interference signal **86,** images of these signals are also present. Reference **83** is an image of the wanted signal, whereas reference **85** is an image of the interference signal **84.**

As discussed above, the controller includes an interference detector **42** and a SNR estimator **44.** The interference detector **42** determines the presence within the dashed area **90** of interference signals on the output of ADC **24a.** Alternatively, the SNR estimator **44** may determine that the SNR of the wanted signal is less than a SNR threshold independent of the interference detector **42.**

In response to the controller **40,** the receiver **10** is placed in the full power mode by powering back on the Q channel path **16b.** Spectral graph **92** illustrates the wanted signal **82** and the adjacent interference signal **84** as output from the in-phase and quadrature mixers **14a, 14b** without their corresponding image signals **83, 85.** Since both of the I and Q channel paths **16a, 16b** are powered on, a complex IQ analog signal is generated. The wanted signal **82** is centered at the low-IF and the adjacent interference signal **64** is close to DC.

Spectral graph **94** illustrates the output of the complex mixer **26** after filtering by the filter **30.** The wanted signal **82** is now centered at DC whereas the interference signal **84** has been suppressed by the filter 30.

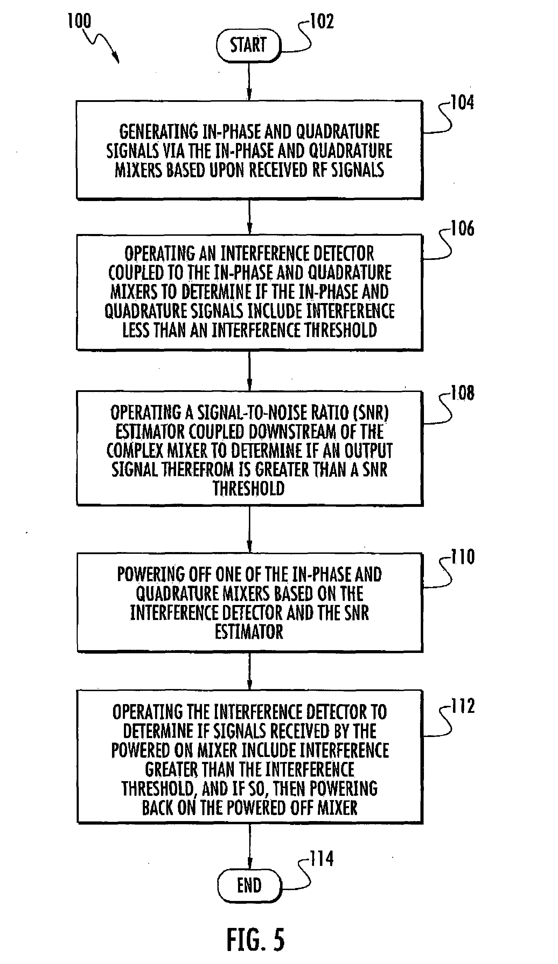

A flowchart **100** illustrating a method for operating a receiver **10** as described above will now be discussed in reference to FIG. 5. From the start (Block **102**), the method comprises generating in-phase and quadrature signals via the in-phase and quadrature mixers **14a, 14b** based upon received RF signals at Block **104.** An interference detector **42** is operated at Block **106** to determine if the in-phase and quadrature signals include interference less than an interference threshold. An SNR estimator **44** coupled downstream of the complex mixer **26** is operated at Block **108** to determine if an output signal therefrom is greater than a SNR threshold. One of the in-phase and quadrature mixers **14a, 14b** is powered off at Block **110** based on the interference detector and said SNR estimator. The method further comprises operating the controller **40** at Block **112** to determine if signals received by the powered on in-phase or quadrature mixer **14a** or **14b** include interference greater than the interference threshold, and if so, then powering back on the powered off in-phase or quadrature mixer. The method ends at Block **114.**

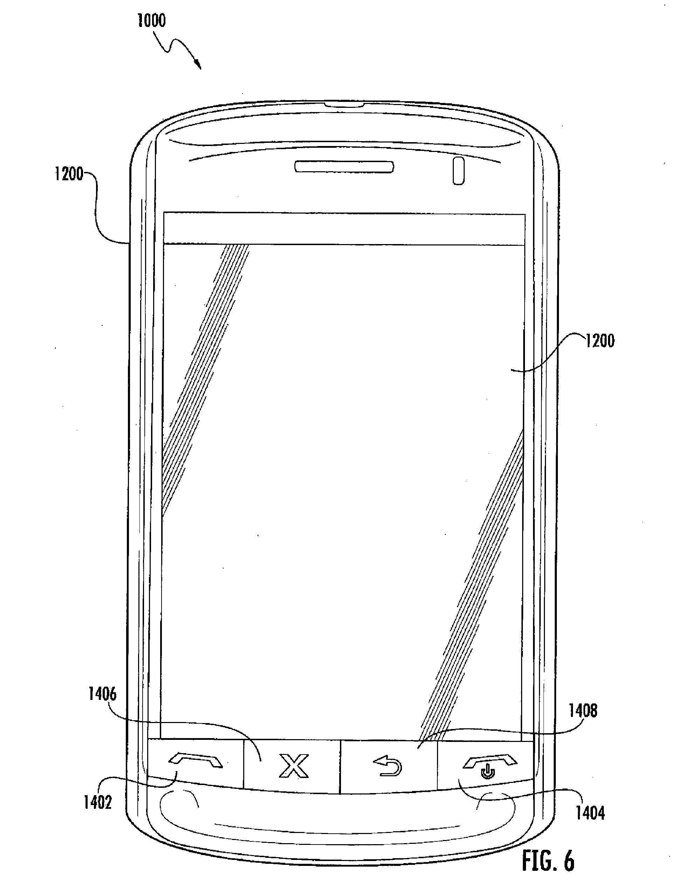

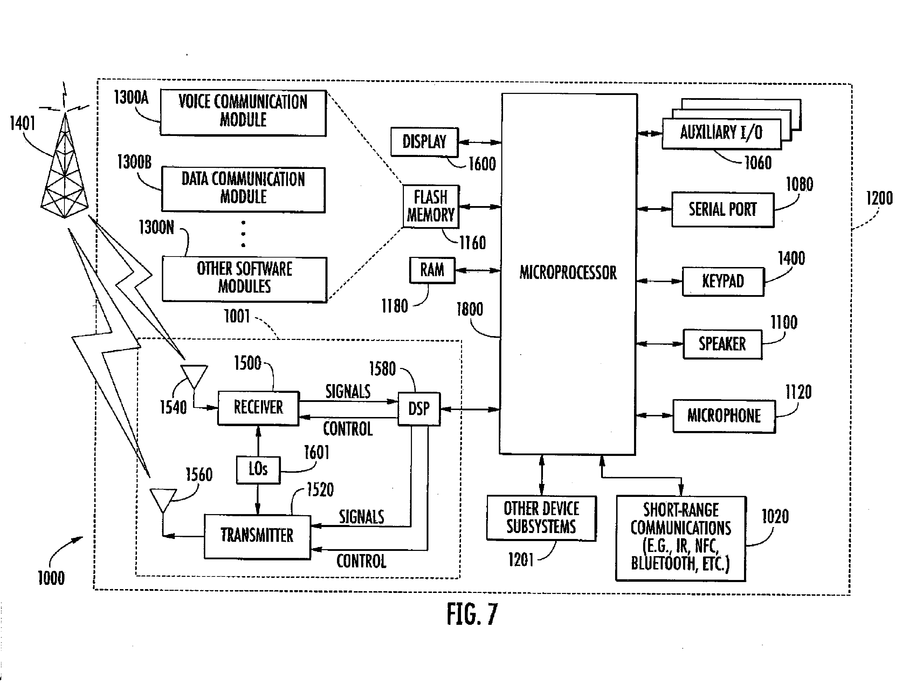

Exemplary components that may be used in various embodiments of the above-described mobile wireless communications device are now described with reference to an exemplary mobile wireless communications device **1000** shown in FIGS. 6 and 7.

The mobile wireless communications device **1000** illustratively includes a portable housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. The keypad **1400** includes a plurality of control keys including an "off hook" (i.e., initiate phone call) key **1402,** an "on hook" (i.e., discontinue phone call) key **1404,** a menu key **1406,** and a return or escape key **1408.**

A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or modules **1300A-1300N** on the device **1000,** such as software modules for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

## Claims

1. A receiver (**10**) comprising:
a first local oscillator (**12**);
an in-phase mixer (**14a**) and a quadrature mixer **(14b**) coupled to said first local oscillator (**12**) and configured to generate in-phase and quadrature signals based upon received RF signals;
a complex mixer (**26**) downstream from said in-phase and quadrature mixers (**14a**, **14b**); and
a controller (**40**) coupled to said in-phase and quadrature mixers (**14a**, **14b**) and configured to
determine when the in-phase and quadrature signals include interference less than an interference threshold, and then power off one of said in-phase and quadrature mixers (**14a**, **14b**) and
determine when the powered off in-phase or quadrature mixer (**14a**, **14b**) has a signal-to-noise ratio (SNR) greater than a SNR threshold, and then power back on the in-phase or quadrature mixer that is powered off.

2. The receiver of Claim 1, wherein said controller (**40**) comprises an interference detector (**42**).

3. The receiver of Claim 2, wherein said interference detector (**42**) comprises a spectrum density estimator.

4. The receiver of Claim 2, wherein said controller (**40**) further comprises a signal-to-noise ratio (SNR) estimator (**44**) for determining the SNR ratio and cooperating with said interference detector (**42**) and coupled downstream of said complex mixer (**26**).

5. The receiver of Claim 4, further comprising a low pass filter (**30**) coupled between said complex mixer (**26**) and said SNR estimator (**44**), and wherein said SNR estimator (**44**) is configured to determine the SNR ratio of an output signal from said low pass filter (**30**).

6. The receiver of Claim 1, further comprising a first analog-to-digital converter (**24a**) coupled between said in-phase mixer (**14a**) and said complex mixer (**26**), and a second analog-to-digital converter (**24b**) coupled between said quadrature mixer (**14b**) and said complex mixer (**26**); and wherein said controller (**40**) is only coupled to an output of one of said first and second analog-to-digital converters (**24a**, **24b**) that is associated with the in-phase or quadrature mixer (**14a**, **14b**) being powered off.

7. The receiver of Claim 1, further comprising a first filter (**18a**) and a first analog-to-digital converter (**24a**) coupled between said in-phase mixer (**14a**) and said complex mixer (**26**), and a second filter (**18b**) and a second analog-to-digital converter (**24b**) coupled between said quadrature mixer (**14b**) and said complex mixer (**26**); and wherein said controller (**40**) is further configured to power off the first filter (**18a**) and the first analog-to-digital converter (**24a**) or the second filter (**18b**) and the second analog-to-digital converter (**24b**) that are associated with the in-phase or quadrature mixer (**14a**, **14b**) being powered off.

8. The receiver of Claim 1, further comprising a battery (**50**) to power said first local oscillator (**12**), said in-phase and quadrature mixers (**14a**, **14b**), said complex mixer (**26**) and said controller (**40**); and wherein said controller (**40**) is coupled between said battery (**50**) and the in-phase or quadrature mixer (**14a**, **14b**) that is being powered off.

9. A method for operating a receiver (**10**) comprising a first local oscillator (**12**), an in-phase mixer (**14a**) and a quadrature mixer (**14b**) coupled to the first local oscillator **12**, a complex mixer (**26**) downstream from the in-phase and quadrature mixers (**14a**, **14b**); and a controller (**40**) coupled to the in-phase and quadrature mixers (**14a**, **14b**), the method comprising:
generating in-phase and quadrature signals via the in-phase and quadrature mixers (**14a**, **14b**) based upon received RF signals;
operating the controller (**40**) to determine when the in-phase and quadrature signals include interference less than an interference threshold, and then power off one of the in-phase and quadrature mixers (**14a**, **14b**); and
operating the controller to determine when the powered off in-phase or quadrature mixer (**14a**, **14b**) has a signal-to-noise ratio (SNR) greater than a SNR threshold, and then power back on the in-phase or quadrature mixer (**14a**, **14b**) that is powered off.

10. The method of Claim 10, wherein the controller (**40**) comprises an interference detector (**42**).

11. The method of Claim 11, wherein the interference detector (**42**) comprises a spectrum density estimator.

12. The method of Claim 11, wherein the controller further comprises a signal-to-noise ratio (SNR) estimator (**44**) cooperating with the interference detector (**42**) and coupled downstream of the complex mixer (**26**) and configured to determine the SNR of an output signal therefrom.

13. The method of Claim 10, further comprising operating the controller (**40**) to determine if signals received by the powered on in-phase or quadrature mixer (**14a**, **14b**) include interference greater than the interference threshold, and if so, then powering back on the powered off in-phase or quadrature mixer (**14a**, **14b**).

14. The method of Claim 10, wherein the receiver further comprising a first analog-to-digital converter (**24a**) coupled between the in-phase mixer (**14a**) and the complex mixer (**26**), and a second analog-to-digital converter (**24b**) coupled between the quadrature mixer (**14b**) and the complex mixer (**26**); and wherein the controller (**40**) is only coupled to an output of one of the first and second analog-to-digital converters (**24a**, **24b**) that is associated with the in-phase or quadrature mixer (**14a**), (**14b**) being powered off.

## Patentansprüche

1. Empfänger (10) mit:
einem ersten Lokaloszillator (12),
einem In-Phase-Mischer (14a) und einem Quadratur-Mischer (14b), die mit dem ersten Lokaloszillator (12) gekoppelt sind, und dazu konfiguriert sind, ein In-Phase-Signal und ein Quadratur-Signal auf Grundlage von empfangenen HF-Signalen zu erzeugen,
einem komplexen Mischer (26), der dem In-Phase- und dem Quadratur-Mischer (14a, 14b) nachgeschaltet ist, und
einer Steuereinheit (40), die mit dem In-Phase- und dem Quadratur-Mischer (14a, 14b) gekoppelt ist und dazu konfiguriert ist,
zu bestimmen, wann das In-Phase- und das Quadratur-Signal eine Interferenz aufweisen, die geringer als ein Interferenzschwellenwert ist, und dann einen von dem In-Phase- und dem Quadratur-Mischer (14a, 14b) abzuschalten und
zu bestimmen, wann der abgeschaltete In-Phase- oder Quadratur-Mischer (14a, 14b) ein Signal-Rausch-Verhältnis (SRV) hat, das größer als ein SRV-Schwellenwert ist, und dann den abgeschalteten In-Phase- oder Quadratur-Mischer wieder anzuschalten.

2. Empfänger nach Anspruch 1, wobei die Steuereinheit (40) einen Interferenzdetektor (42) aufweist.

3. Empfänger nach Anspruch 2, wobei der Interferenzdetektor (42) einen Spektrumsdichteschätzer aufweist.

4. Empfänger nach Anspruch 2, wobei die Steuereinheit (40) ferner einen Signal-Rausch-Verhältnis- (SRV-) Schätzer (44) zum Bestimmen des SRV aufweist, der mit dem Interferenzdetektor (42) zusammenarbeitet und der dem komplexen Mischer (26) nachgeschaltet gekoppelt ist.

5. Empfänger nach Anspruch 4, ferner mit einem Tiefpassfilter (30), der zwischen dem komplexen Mischer (26) und dem SRV-Schätzer (44) gekoppelt ist, und wobei der SRV-Schätzer (44) dazu konfiguriert ist, das SRV des Ausgabesignals von dem Tiefpassfilter (30) zu bestimmen.

6. Empfänger nach Anspruch 1, ferner mit einem ersten Analog-Digital-Wandler (24a), der zwischen dem In-Phase-Mischer (14a) und dem komplexen Mischer (26) gekoppelt ist, und einem zweiten Analog-Digital-Wandler (24b), der zwischen dem Quadratur-Mischer (14b) und dem komplexen Mischer (26) gekoppelt ist, und wobei die Steuereinheit (40) nur an einen Ausgang eines von dem ersten und dem zweiten Analog-Digital-Wandler (24a, 24b) gekoppelt ist, der mit dem abgeschalteten In-Phase- oder Quadratur-Mischer (14a, 14b) verknüpft ist.

7. Empfänger nach Anspruch 1, ferner mit einem ersten Filter (18a) und einem ersten Analog-Digital-Wandler (24a), der zwischen dem In-Phase-Mischer (14a) und dem komplexen Mischer (26) gekoppelt ist, und einem zweiten Filter (18b) und einem zweiten Analog-Digital-Wandler (24b), der zwischen dem Quadratur-Mischer (14b) und dem komplexen Mischer (26) gekoppelt ist, und wobei die Steuereinheit (40) ferner dazu konfiguriert ist, den ersten Filter (18a) und den ersten Analog-Digital-Wandler (24a) oder den zweiten Filter (18b) und den zweiten Analog-Digital-Wandler (24b) abzuschalten, die mit dem abgeschalteten In-Phase- oder Quadratur-Mischer (14a, 14b) verknüpft sind.

8. Empfänger nach Anspruch 1, ferner mit einer Batterie (50), um den ersten Lokaloszillator (12), den In-Phase- und den Quadratur-Mischer (14a, 14b), den komplexen Mischer (26) und die Steuereinheit (40) mit Strom bzw. Energie bzw. Leistung zu versorgen, und wobei die Steuereinheit (40) zwischen der Batterie (50) und dem abgeschalteten In-Phase- oder Quadratur-Mischer (14a, 14b) gekoppelt ist.

9. Verfahren zum Betreiben eines Empfängers (10) mit einem ersten Lokaloszillator (12), einem In-Phase-Mischer (14a) und einem Quadratur-Mischer (14b), der mit dem ersten Lokaloszillator (12) gekoppelt ist, einem komplexen Mischer (26), der dem In-Phase- und dem Quadratur-Mischer (14a, 14b) nachgeschaltet ist, und einer Steuereinheit (40), die mit dem In-Phase- und dem Quadratur-Mischer (14a, 14b) gekoppelt ist, wobei das Verfahren Folgendes aufweist:
Erzeugen eines In-Phase- und eines Quadratur-Signals über den In-Phase- und den Quadratur-Mischer (14a, 14b) auf Grundlage von empfangenen HF- bzw. Funkfrequenz-Signalen,
Betreiben der Steuereinheit (40), um zu bestimmen, wann das In-Phase- und das Quadratur-Signal eine Interferenz aufweisen, die geringer als ein Interferenzschwellenwert ist, und dann einen von dem In-Phase- und dem Quadratur-Mischer (14a, 14b) auszuschalten und
Betreiben der Steuereinheit, um zu bestimmen, wann der ausgeschaltete In-Phase- oder der ausgeschaltete Quadratur-Mischer (14a, 14b) ein Signal-Rausch-Verhältnis (SRV) aufweist, das größer als ein SRV-Schwellenwert ist, und dann den abgeschalteten In-Phase- oder den Quadratur-Mischer (14a, 14b) wieder anzuschalten.

10. Verfahren nach Anspruch 10, wobei die Steuereinheit (40) einen Interferenzdetektor (42) aufweist.

11. Verfahren nach Anspruch 11, wobei der Interferenzdetektor (42) einen Spektrumsdichteschätzer aufweist.

12. Verfahren nach Anspruch 11, wobei die Steuereinheit ferner einen Signal-Rausch-Verhältnis- (SRV-) Schätzer (44) aufweist, der mit dem Interferenzdetektor (42) zusammenarbeitet und dem komplexen Mischer (26) nachgeschaltet gekoppelt ist und dazu konfiguriert ist, das SRV eines Ausgangssignals davon zu bestimmen.

13. Verfahren nach Anspruch 10, ferner mit Betreiben der Steuereinheit (40), um zu bestimmen, ob Signale, die von dem angeschalteten In-Phase- oder Quadratur-Mischer (14a, 14b) empfangen werden, eine Interferenz aufweisen, die größer als der Interferenzschwellenwert ist, und wenn ja, dann Wiederanschalten des abgeschalteten In-Phase- oder Quadratur-Mischers (14a, 14b).

14. Verfahren nach Anspruch 10, wobei der Empfänger ferner einen ersten Analog-Digital-Wandler (24a), der zwischen dem In-Phase-Mischer (14a) und dem komplexen Mischer (26) gekoppelt ist, und einen zweiten Analog-Digital-Wandler . (24b) aufweist, der zwischen dem Quadratur-Mischer (14b) und dem komplexen Mischer (26) gekoppelt ist, und wobei die Steuereinheit (40) nur an einen Ausgang eines von dem ersten und dem zweiten Analog-Digital-Wandler (24a, 24b) gekoppelt ist, der mit dem abgeschalteten In-Phase- oder Quadratur-Mischer (14a), (14b) verknüpft ist.

## Revendications

1. Récepteur (10) comprenant :
un premier oscillateur local (12) ;
un mélangeur en phase (14a) et un mélangeur en quadrature (14b) reliés audit premier oscillateur local (12) et configurés pour générer des signaux en phase et en quadrature sur la base de signaux RF reçus ;
un mélangeur complexe (26) en aval desdits mélangeurs en phase et en quadrature (14a, 14b) ; et
une unité de commande (40) reliée auxdits mélangeurs en phase et en quadrature (14a, 14b) et configurée pour
déterminer l'instant où les signaux en phase et en quadrature contiennent un brouillage inférieur à un seuil de brouillage, puis pour désactiver l'un desdits mélangeurs en phase et en quadrature (14a, 14b), et
déterminer l'instant où le mélangeur en phase ou en quadrature désactivé (14a, 14b) présente un rapport signal à bruit (SNR, Signal to Noise Ratio) supérieur à un seuil de SNR, puis réactiver le mélangeur en phase et en quadrature qui est désactivé.

2. Récepteur selon la revendication 1, dans lequel ladite unité de commande (40) comprend un détecteur de brouillage (42).

3. Récepteur selon la revendication 2, dans lequel ledit détecteur de brouillage (42) comprend un estimateur de densité spectrale.

4. Récepteur selon la revendication 2, dans lequel ladite unité de commande (40) comprend en outre un estimateur (44) de rapport signal à bruit (SNR) destiné à déterminer le rapport SNR et coopérant avec ledit détecteur de brouillage (42) et relié en aval dudit mélangeur complexe (26).

5. Récepteur selon la revendication 4, comprenant en outre un filtre passe-bas (30) relié entre ledit mélangeur complexe (26) et ledit estimateur de SNR (44), et dans lequel ledit estimateur de SNR (44) est configuré pour déterminer le rapport SNR d'un signal de sortie dudit filtre passe-bas (30).

6. Récepteur selon la revendication 1, comprenant en outre un premier convertisseur analogique-numérique (24a) relié entre ledit mélangeur en phase (14a) et ledit mélangeur complexe (26), et un second convertisseur analogique-numérique (24b) relié entre ledit mélangeur en phase (14b) et ledit mélangeur complexe (26) ; et dans lequel ladite unité de commande (40) n'est reliée qu'à une sortie de l'un desdits premier et second convertisseurs analogique-numérique (24a, 24b) qui est associé au mélangeur en phase ou en quadrature (14a, 14b) qui est désactivé.

7. Récepteur selon la revendication 1, comprenant en outre un premier filtre (18a) et un premier convertisseur analogique-numérique (24a) reliés entre ledit mélangeur en phase (14a) et ledit mélangeur complexe (26), et un second filtre (18b) et un second convertisseur analogique-numérique (24b) reliés entre ledit mélangeur en quadrature (14b) et ledit mélangeur complexe (26) ; et dans lequel ladite unité de commande (40) est en outre configurée pour désactiver le premier filtre (18a) et le premier convertisseur analogique-numérique (24a) ou le second filtre (18b) et le second convertisseur analogique-numérique (24b) qui sont associés au mélangeur en phase ou en quadrature (14a, 14b) ayant été désactivé.

8. Récepteur selon la revendication 1, comprenant en outre une batterie (50) destinée à alimenter ledit premier oscillateur local (12), lesdits mélangeurs en phase et en quadrature (14a, 14b), ledit mélangeur complexe (26) et ladite unité de commande (40) ; et dans lequel ladite unité de commande (40) est reliée entre ladite batterie (50) et le mélangeur en phase ou en quadrature (14a, 14b) qui est désactivé.

9. Procédé de mise en fonctionnement d'un récepteur (10) comprenant un premier oscillateur local (12), un mélangeur en phase (14a) et un mélangeur en quadrature (14b) reliés au premier oscillateur local (12), un mélangeur complexe (26) en aval desdits mélangeurs en phase et en quadrature (14a, 14b) ; et une unité de commande (40) reliée aux mélangeurs en phase et en quadrature (14a, 14b), le procédé consistant à :
générer des signaux en phase et en quadrature via les mélangeurs en phase et en quadrature (14a, 14b) sur la base de signaux RF reçus ;
mettre en fonctionnement l'unité de commande (40) pour déterminer l'instant où les signaux en phase et en quadrature contiennent un brouillage inférieur à un seuil de brouillage, puis désactiver l'un des mélangeurs en phase et en quadrature (14a, 14b) ; et
mettre en fonctionnement l'unité de commande pour déterminer l'instant où le mélangeur en phase ou en quadrature (14a, 14b) désactivé présente un rapport signal à bruit (SNR) supérieur à un seuil de SNR, puis réactiver le mélangeur en phase et en quadrature (14a, 14b) qui est désactivé.

10. Procédé selon la revendication 10, dans lequel l'unité de commande (40) comprend un détecteur de brouillage (42).

11. Procédé selon la revendication 11, dans lequel le détecteur de brouillage (42) comprend un estimateur de densité spectrale.

12. Procédé selon la revendication 11, dans lequel l'unité de commande comprend en outre un estimateur (44) de rapport signal à bruit (SNR) coopérant avec le détecteur de brouillage (42) et relié en aval du mélangeur complexe (26) et configuré pour déterminer le SNR d'un signal de sortie provenant de celui-ci.

13. Procédé selon la revendication 10, consistant en outre à mettre en fonctionnement l'unité de commande (40) pour déterminer si des signaux reçus par le mélangeur en phase ou en quadrature (14a, 14b) activé contiennent un brouillage supérieur au seuil de brouillage, et si oui, pour réactiver alors le mélangeur en phase ou en quadrature (14a, 14b) désactivé.

14. Procédé selon la revendication 10, dans lequel le récepteur comprend en outre un premier convertisseur analogique-numérique (24a) relié entre le mélangeur en phase (14a) et le mélangeur complexe (26), et un second convertisseur analogique-numérique (24b) relié entre le mélangeur en phase (14b) et le mélangeur complexe (26) ; et dans lequel l'unité de commande (40) n'est reliée qu'à une sortie de l'un des premier et second convertisseurs analogique-numérique (24a, 24b) qui est associé au mélangeur en phase ou en quadrature (14a, 14b) qui est désactivé.
